# EUROPEAN PATENT SPECIFICATION

(11) **EP 4 441 443 B1**
(45) Date of publication and mention of the grant of the patent: **10.09.2025**
(21) Application number: 22821597.6
(22) Date of filing: 01.12.2022
(51) Int. Cl.: F25B 9/14, F25B 30/04

(54) **CRYOGENIC ADSORPTION REFRIGERATOR**
KRYOGENER ADSORPTIONSKÜHLAPPARAT
RÉFRIGÉRATEUR À ADSORPTION CRYOGÉNIQUE

(30) Priority: 03.12.2021 GB 202117477
(43) Date of publication of application: 09.10.2024
(73) Proprietor: Chase Research Cryogenics Limited, Sheffield Yorkshire S3 8AG (GB)
(72) Inventor: CHASE, Simon, Sheffield Yorkshire S3 8AG (GB)
(74) Representative: Definition IP Limited
(86) International application number: PCT/GB2022/053037
(87) International publication number: WO 2023/099892

(56) References cited:
- CN-B- 104 819 596
- US-A1- 2017 146 266
- LAU J ET AL: "Experimental tests and modeling of the optimal orifice size for a closed cycle ^4He sorption refrigerator", CRYOGENICS, ELSEVIER, KIDLINGTON, GB, vol. 46, no. 11, 1 November 2006 (2006-11-01), pages 809 - 814, XP028025950, ISSN: 0011-2275, [retrieved on 20061101], DOI: 10.1016/J.CRYOGENICS.2006.08.003

## Description

### Technical Field

The present invention relates to cryogenic adsorption refrigerators for cooling thermal loads.

### Background

Cryogenic adsorption refrigerators (also known as adsorption or sorption coolers) are a type of evaporative cooler. They are frequently used for cooling certain types of scientific and commercial equipment such as astronomical telescope sensors, far-infrared imaging cameras and quantum computer chips to extremely low temperatures (typically lower than 1K).

Adsorption refrigerators are one of a limited number of devices that can reach temperatures below 4.2K, which is the boiling point of Helium-4 (⁴He, the common isotope of helium) at normal atmospheric pressure. Alternative devices that can reach temperatures below 4.2K include mechanical coolers that rely upon the expansion of gaseous helium (e.g. Gifford McMahon, Pulse Tube, Stirling or Joule-Thomson), dilution refrigerators, adiabatic demagnetisation refrigerators and Pomeranchuk cooling devices.

Adsorption refrigerators use the latent heat of evaporation of a liquid to produce a cooling effect. Adsorption refrigerators are simple, compact and low power. They can cool to temperatures of around 800mK using only ⁴He as the coolant, and to temperatures of around 200mK using ³He as the coolant (the light isotope of helium). Adsorption refrigerators are preferred over other types of cooling devices such as mechanical cooling devices in certain applications because they are simple to use, can reach extremely low temperatures, contain no moving parts (making them vibrationless) and do not require a magnetic field to operate.

In a typical adsorption refrigerator, an adsorbent material, such as activated charcoal or a mineral zeolite, is located in a first chamber. A liquid coolant, such as ⁴He or ³He, is located in a second "evaporation" chamber, which acts as a liquid reservoir. The first and second chambers are fluidly connected via a fluid flow conduit. The adsorbent material in the first chamber is used to drive evaporation of the liquid coolant in the second chamber (via the fluid flow conduit) by adsorbing the vapour produced as the coolant evaporates and thereby reducing the vapour pressure in the evaporation chamber. As the liquid coolant evaporates, the vapour carries away energy equal to the latent heat of evaporation. This energy loss causes a cooling of the remaining liquid coolant present in the evaporation chamber. The evaporation chamber is thermally connected to a thermal load to be cooled.

One type of adsorption refrigerator is a single-shot adsorption refrigerator. Single-shot adsorption refrigerators do not provide continuous cooling but instead operate on a regenerative cycle whereby a short regeneration phase is required periodically. The refrigeration phase then lasts for a longer but limited time before another regenerative phase is required. After operating in a cooling mode for a period of time, all of the coolant is adsorbed by the adsorbent material and no coolant remains in the evaporation chamber. Before being used again, the device must be regenerated by heating the adsorbent material so that the coolant is desorbed from the adsorbent material and coolant must be condensed so it can be returned to the evaporation chamber as a liquid. The device must also be pre-cooled to a temperature at which the device can begin to operate effectively (typically below around 5K).

As noted above, a coolant commonly used in adsorption refrigerators is ⁴He. It is known that liquid ⁴He becomes superfluid when cooled to a temperature below its "lambda point" of approximately 2.17K. In its superfluid state, ⁴He is known to form a superfluid film that creeps up the walls of a vessel in which it is contained.

When used as a coolant in an adsorption refrigerator, during operation the temperature of ⁴He in the evaporation chamber will typically reduce to below the lambda point. Once below the lambda point, the superfluid ⁴He forms a superfluid film that creeps up the sides of the evaporation chamber and flows through the outlet of the evaporation chamber down the tube connecting the evaporation chamber with the adsorption pump.

This loss of ⁴He coolant from the evaporation chamber is undesirable because it reduces the length of time that the adsorption refrigerator can operate in a cooling mode for (known as the "hold time" or "run time" of the device). This is because coolant that escapes from the evaporation chamber as a superfluid does not evaporate in the evaporation chamber and therefore does not cool the evaporation chamber. Coolant is effectively being lost from the evaporation chamber before it can provide any useful cooling.

To try to address this problem of superfluid ⁴He coolant flowing out of the evaporation chamber, it is known to provide a plate comprising a narrow aperture in the fluid flow conduit connecting the evaporation chamber with the adsorption pump. The plate is located at the entrance of the fluid flow conduit where the fluid flow conduit connects with the evaporation chamber or along the length of the fluid flow conduit between the evaporation chamber and the adsorption pump. The narrow aperture is shaped and sized so that it still allows sufficient flow of gaseous coolant from the evaporation chamber to the adsorption pump while reducing the rate at which superfluid ⁴He can flow out of the evaporation chamber.

Such an arrangement is disclosed in Lau et al (2006), "Experimental tests and modelling of the optimal orifice size for a closed cycle 4He sorption refrigerator", Cryogenics (46) which discloses a cryogenic adsorption refrigerator according to the preamble of claim 1.

Advantageously, providing a plate including a narrow aperture at the entrance of the fluid flow conduit or along the length of the fluid flow conduit can increase the hold time of the device by reducing the rate of flow of superfluid ⁴He out of the evaporation chamber. However, this arrangement can have several disadvantages.

First, it can take a significant amount of time (in some cases several days) to pre-cool the device from room temperature (approximately 300K) to a temperature at which the device can begin to operate effectively (typically approximately 5K).

Further, the narrow aperture increases the velocity of gaseous coolant flowing through it and into the fluid flow conduit. The high velocity gaseous coolant can potentially induce oscillations in the column of gas present in the fluid flow conduit. This is undesirable because it can increase heat transfer through the column of gas, producing an additional heat load on the evaporation chamber which reduces the performance of the device.

Still further, as well as reducing the flow of superfluid coolant, the narrow aperture also reduces the flow rate of gaseous coolant from the evaporation chamber, thereby reducing the overall cooling capacity of the device. In fact, the narrow aperture reduces the flow rate of gaseous coolant even when the device is operating at temperatures above the lambda point, where there is no need to reduce the flow of superfluid film from the evaporation chamber because the coolant is not cold enough to be in a superfluid state.

It would be desirable to provide a cryogenic adsorption refrigerator that can obviate or mitigate some or all of the above-described disadvantages.

### Summary of the Invention

In accordance with the present invention there is provided a cryogenic adsorption refrigerator for cooling a thermal load as defined in claim 1.

The cryogenic adsorption refrigerator comprises: an adsorption pump comprising a chamber containing an adsorbent material; an evaporator arranged to contain coolant; and one or more fluid flow conduits. The evaporator comprises a first evaporation chamber and a second evaporation chamber. The first evaporation chamber is fluidly connected with the adsorption pump via the one or more fluid flow conduits such that gaseous coolant can flow from the first evaporation chamber to the adsorption pump. The first evaporation chamber and the second evaporation chamber are fluidly connected via a flow control aperture arranged to reduce the flow of superfluid coolant from the second evaporation chamber to the first evaporation chamber.

Optionally, the first evaporation chamber and the second evaporation chamber are separated by a wall, and the flow control aperture is provided within the wall.

Optionally, the wall is provided by a plate positioned within the evaporator between the first evaporation chamber and the second evaporation chamber.

Optionally, the first evaporation chamber has a depth of approximately 3mm between the wall and at least one of the one or more fluid flow conduits.

Optionally, the wall comprises a further annular wall that encloses the flow control aperture and extends into the second evaporation chamber

Optionally, at least part of the flow control aperture is tapered such that it reduces in diameter in the direction of the second evaporation chamber.

Optionally, the flow control aperture comprises an inner edge that is electropolished or an atomically sharp knife-edge.

Optionally, the flow control aperture has a diameter of between approximately 0.2mm and 2.5mm.

Optionally, the flow control aperture is located such that in use it is not vertically aligned with the one or more fluid flow conduits.

Optionally, the cryogenic adsorption refrigerator comprises two or more fluid flow conduits.

Optionally, in use the first evaporation chamber is an upper evaporation chamber and the second evaporation chamber is a lower evaporation chamber.

Optionally, the first evaporation chamber, the second evaporation chamber and the flow control aperture are arranged such that in use during a regeneration cycle liquid coolant falls by gravity from the first evaporation chamber to the second evaporation chamber via the flow control aperture.

Optionally, the one or more fluid flow conduits directly fluidly connect the first evaporation chamber with the adsorption pump.

Optionally, the device comprises a further chamber arranged to intercept fluid travelling between the first evaporation chamber and the adsorption pump, and wherein the one or more fluid flow conduits fluidly connect the first evaporation chamber with the further chamber.

Optionally, the device further comprises one or more further fluid flow conduits fluidly connecting the further chamber with the adsorption pump.

Optionally, the further chamber defines an annular cavity.

Optionally, a mesh is located within the annular cavity.

Optionally, the one or more fluid flow conduits that fluidly connect the first evaporation chamber with the further chamber have a smaller diameter than the one or more further fluid flow conduits that fluidly connect the further chamber with the adsorption pump.

Optionally, the number of fluid flow conduits fluidly connecting the first evaporation chamber with the further chamber is different to the number of further fluid flow conduits fluidly connecting the further chamber with the adsorption pump. Optionally, a porous material is provided within the first evaporation chamber and the second evaporation chamber.

Optionally, the one or more fluid flow conduits extend into the first evaporation chamber.

Advantageously, in accordance with embodiments of the invention it has been determined that splitting the evaporator of an adsorption refrigerator into first and second evaporation chambers and locating a flow control aperture between the first and second evaporation chambers rather than in the fluid flow conduit that connects the evaporator with the adsorption pump can maintain the advantages of reducing the flow of superfluid coolant from the evaporator while reducing the time needed to pre-cool device to its operating temperature and improving the thermal performance of the device.

In particular, embodiments of the invention provide a cryogenic adsorption refrigerator that comprises an evaporator that includes first and second evaporation chambers separated by a flow control aperture, the first evaporation chamber being fluidly connected to the adsorption pump via one or more fluid flow conduits (also referred to herein as tubes). The flow control aperture is arranged to reduce (also referred to herein as restrict) the flow of superfluid coolant from the second evaporation chamber to the first evaporation chamber. Advantageously, the first evaporation chamber provides a volume within the evaporator that can more easily exchange heat energy (e.g., by convection of coolant) with the adsorption pump because there is no flow control aperture restricting the flow of coolant in the path between the first evaporation chamber and the adsorption pump. This can reduce the time needed to pre-cool device to its operating temperature (typically below approximately 5K) prior to use.

Advantageously, in embodiments where two or more fluid flow conduits are provided fluidly connecting the first evaporation chamber with the adsorption pump, this can further reduce the time needed to pre-cool the device to its operating temperature by allowing coolant to flow between the first evaporation chamber and the adsorption pump in a convective loop through two or more of the fluid flow conduits. Advantageously, compared with conventional arrangements, this can reduce the time needed to pre-cool device from room temperature to its operating temperature from several days to several hours.

Additionally, locating the flow control aperture between first and second evaporation chambers rather than at the entrance of the fluid flow conduit is advantageous because it can result in reduced pressure oscillations of gaseous coolant in the fluid flow conduit caused by the increased velocity of coolant passing through the flow control aperture. The location of the flow control aperture away from the entrance of the fluid flow conduit can allow pressure oscillations to dissipate within the first evaporation chamber. This can improve the overall performance of device by reducing heat transfer through the column of gaseous coolant present in the fluid flow conduit.

Additionally, while the majority of coolant will typically be located in the second evaporation chamber when the device is operating in a cooling mode, in certain embodiments, when the device begins to operate in a cooling mode, a small amount of liquid coolant can remain in the first evaporation chamber. This is advantageous because the coolant that remains in the first evaporation chamber can evaporate during the initial cooling stage. The rate of flow of gaseous coolant from the first evaporation chamber to the adsorption pump is not restricted by the flow control aperture. Advantageously, since the cooling capacity is limited by the rate of flow of evaporated coolant out of the evaporator, this means that in the initial cooling stage when coolant is evaporating from the first evaporation chamber, the device can have a higher cooling capacity. Typically, the temperature of the coolant will not be below the lambda point in the initial cooling phase so the problem of superfluid coolant forming a film that climbs out of the first evaporation chamber is not present.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 is a simplified schematic diagram of a cryogenic adsorption refrigerator in accordance with certain embodiments of the invention;
Figures 2A-2E show the cryogenic adsorption refrigerator of Figure 1 in use during a cooling cycle and during a regeneration cycle;
Figure 3 is a simplified schematic diagram of an evaporator in accordance with certain embodiments of the invention;
Figures 4A-4D show different views of the wall of the evaporator of Figure 3;
Figure 5 is a simplified diagram of a cryogenic adsorption refrigerator system in accordance with certain embodiments of the invention that includes the evaporator of Figure 3;
Figure 6 is a simplified schematic diagram of the further chamber of the cryogenic adsorption refrigerator of Figure 5; and
Figure 7 is a simplified schematic diagram of a cryogenic adsorption refrigerator in accordance with certain embodiments of the invention.

### Detailed Description

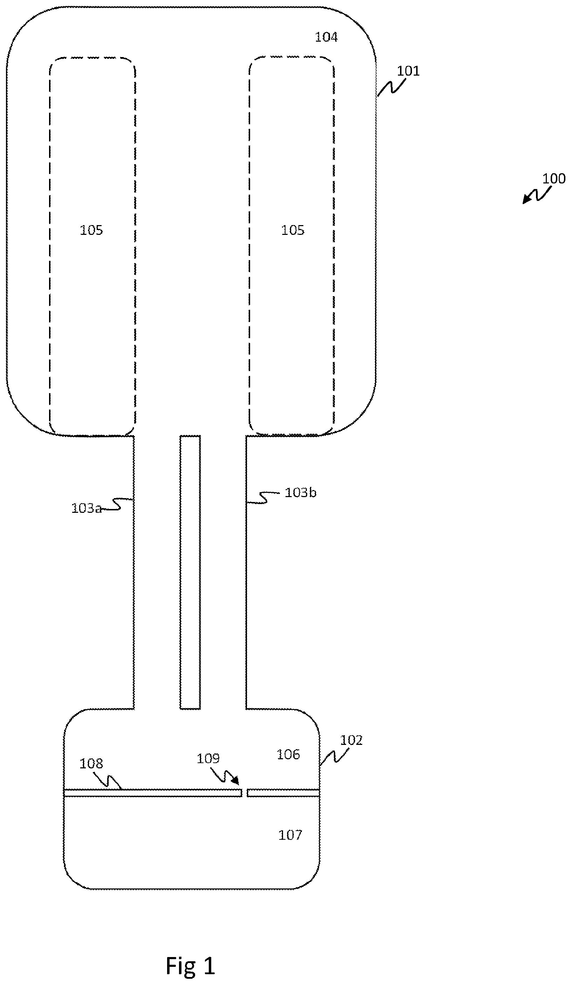

Figure 1 is a simplified schematic diagram of a cryogenic adsorption refrigerator 100 in accordance with certain embodiments of the invention. The cryogenic adsorption refrigerator 100 comprises an adsorption pump 101, an evaporator 102, a first fluid flow conduit 103a and a second fluid flow conduit 103b.

The cryogenic adsorption refrigerator 100 can be used to cool a thermal load such as an item of scientific equipment or a further refrigeration stage of a multi-stage cooling system to extremely low temperatures (for example temperatures of less than 5K). A thermal load to be cooled is thermally connected to the evaporator 102. The term cryogenic is used herein to refer to temperatures of less than 120K (-153°C).

Adsorption refrigerators are also known as adsorption or sorption coolers or fridges.

The cryogenic adsorption refrigerator 100 is a single-shot refrigerator. A fixed amount of coolant is sealed during assembly within the space within the device 100 provided by the adsorption pump 101, evaporator 102 and fluid flow conduits 103a 103b. This means that the device 100 can operate for a finite period of time before no coolant remains in the evaporator 102, at which point it must be regenerated (also known as "re-cycling") before it can be used to provide cooling again.

The adsorption pump 101 comprises a pump chamber 104. The pump chamber 104 is an enclosed volume that contains an adsorbent material 105. In this embodiment the adsorbent material 105 is activated charcoal. However, it will be understood that other suitable types of adsorbent material such as mineral zeolite can be used. As will be understood, in contrast with absorption, adsorption is a surface process which involves the adhesion of molecules onto the surface of a porous solid material.

In contrast with conventional adsorption refrigerators which include a single evaporation chamber, the evaporator 102 comprises two evaporation chambers provided by a first evaporation chamber 106 and a second evaporation chamber 107. In the context of adsorption refrigerators, an evaporation chamber is also known as an evaporation pot, cold pot, cold stage or cold head.

The first evaporation chamber 106 is fluidly connected to the pump chamber 104 via both the first fluid flow conduit 103a and the second fluid flow conduit 103b. Fluid flow conduits are also referred to herein as tubes. The first fluid flow conduit 103a and the second fluid flow conduit 103b enable fluid to flow between the first evaporation chamber 106 and the adsorption pump 101. The first fluid flow conduit 103a and second fluid flow conduit 103b can be provided by lengths of stainless-steel tube.

The first evaporation chamber 106 and second evaporation chamber 107 each provide an enclosed volume that contains liquid and/or gaseous coolant during operation of the device 100.

During use, the first fluid flow conduit 103a and the second fluid flow conduit 103b direct gaseous coolant from the first evaporation chamber 106 to the pump chamber 104 so that it can be adsorbed by the adsorbent material 105. The first fluid flow conduit 103a and second fluid flow conduit 103b also direct liquid coolant from the pump chamber 104 back into the first evaporation chamber 106 when the device is being "regenerated".

The evaporator 102 comprises a wall 108 that separates the first evaporation chamber 106 and the second evaporation chamber 107. The wall 108 is also referred to as a septum. In certain embodiments, the first evaporation chamber has a depth of approximately 3mm between the wall 108 and at least one of the one or more fluid flow conduits 103a 103b.

In certain embodiments, the first evaporation chamber 106 and second evaporation chamber 107 are formed by introducing a plate comprising a suitable flow control aperture into a single larger evaporation chamber to create two sub-chambers. In such embodiments, the wall 108 is defined by the plate and forms a base wall of the first evaporation chamber 106 and a top wall of the second evaporation chamber 107. Alternatively, in other embodiments the first evaporation chamber 106 and second evaporation chamber 107 can be provided by separate chambers that are fluidly connected via a suitable flow control aperture.

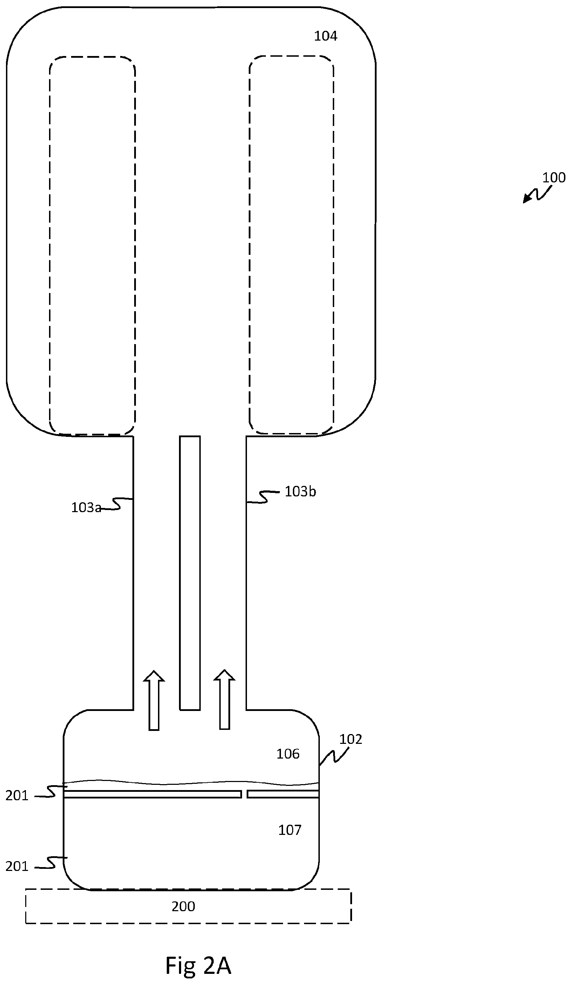

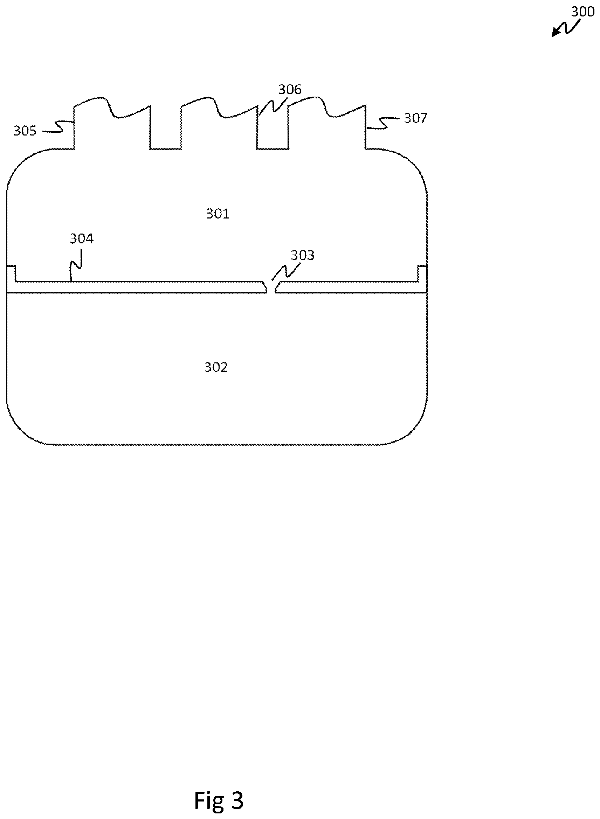

The first evaporation chamber 106 and the second evaporation chamber 107 are fluidly connected via an aperture 109. The aperture 109 is a flow control aperture in that it is used to control the flow of coolant between the two chambers. In particular, the aperture 109 is sized and shaped so that it substantially restricts the flow of superfluid coolant from the second evaporation chamber 107 to the first evaporation chamber 106 while allowing gaseous coolant that has evaporated in the second evaporation chamber 107 to pass from the second evaporation chamber 107 to the first evaporation chamber 106 as described in more detail herein and in particular with reference to Figures 2A-2E. Suitable arrangements for the aperture 109 are described in more detail herein and in particular with reference to Figure 3.

The aperture 109 typically has a circular cross-section.

In certain embodiments, the aperture 109 has a diameter of approximately 0.35mm.

In certain embodiments, the aperture 109 has a diameter of between 0.2mm and 2.5mm.

In certain embodiments, the aperture 109 comprises an inner edge that is electropolished or that is an atomically sharp knife-edge. Advantageously, decreasing the surface roughness of the aperture 109 in this way can decrease the effective circumference of the aperture 109 and thereby reduce the superfluid film flow rate through the aperture 109. Further, a knife-edge aperture also causes a local thinning of the superfluid film as it traverses the knife-edge, thereby further reducing the superfluid film flow rate.

When the cryogenic adsorption refrigerator 100 is positioned for use in the orientation shown in Figure 1, the first evaporation chamber 106 is an upper chamber and the second evaporation chamber 107 is a lower chamber. That is, the first evaporation chamber 106 is located above the second evaporation chamber 107 relative to the base of the cryogenic adsorption refrigerator 100.

The cryogenic adsorption refrigerator 100 typically includes additional components to those shown in Figure 1 as will be understood by the skilled person. For example, typically the entire cryogenic adsorption refrigerator 100 is contained within a vacuum chamber to improve the thermal performance of the device. One or more pre-cooling refrigerators and one or more heaters can also be provided for selectively heating and cooling parts of the device.

In the embodiment shown in Figure 1, the cryogenic adsorption refrigerator 100 has two fluid flow conduits 103a 103b connecting the evaporator 102 with the adsorption pump 101. However, in other embodiments, one evaporation tube, or three or more evaporation tubes can be provided.

The cryogenic adsorption refrigerator 100 of Figure 1 will now be described in use with reference to Figures 2A-2E.

Figures 2A-2E show the cryogenic adsorption refrigerator 100 of Figure 1 in use during a cooling cycle and during a regeneration cycle. For clarity, some reference signs have been omitted from Figures 2A-2E.

Figure 2A shows the cryogenic adsorption refrigerator 100 at the start of a cooling cycle. The cryogenic adsorption refrigerator 100 has been pre-cooled to an initial temperature. Typically, the initial temperature is between approximately 3K and 5K.

The evaporator 102 is connected to a thermal load 200.

Coolant 201 (⁴He) is present within the evaporator 102. In certain embodiments, as shown in Figure 2A, the amount of coolant in the device 100 is such that at the start of a cooling cycle the volume of liquid coolant in the evaporator 102 exceeds the volume of the second evaporation chamber 107 such that both the first evaporation chamber 106 and the second evaporation chamber 107 contain liquid coolant.

Coolant 201 in the first evaporation chamber 106 beings to evaporate. The gaseous coolant flows down the first and second fluid flow conduits 103a 103b towards the adsorption pump chamber 104, where it is adsorbed by the adsorbent material present within the chamber 104. This process continues. The evaporation of coolant 201 from the first evaporation chamber 106 reduces the temperature of the evaporator 102 by the process of evaporative cooling.

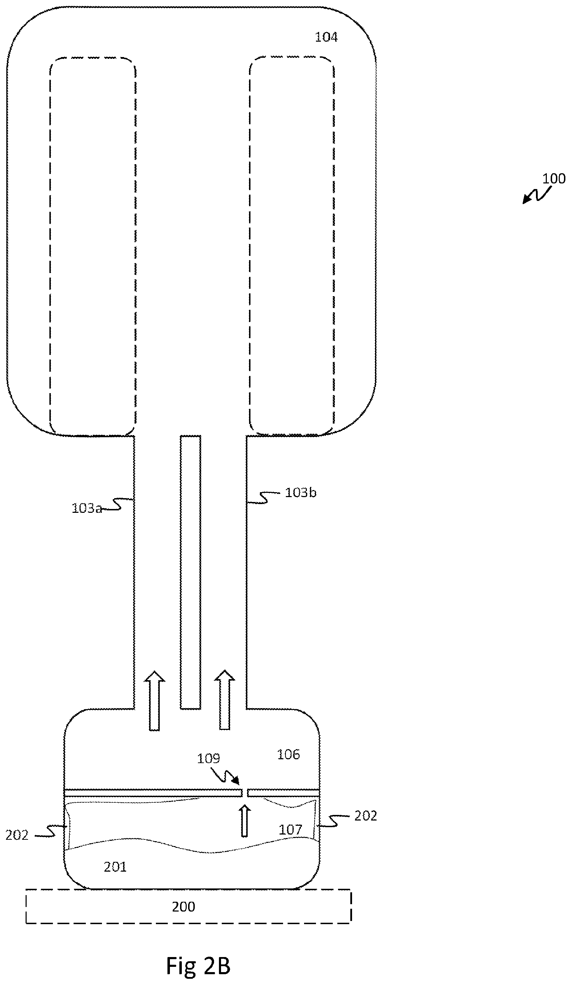

Subsequently, as shown in Figure 2B, after a period of operation, liquid coolant that was present within the first evaporation chamber 106 has evaporated.

Coolant 201 in the second evaporation chamber 107 evaporates. The evaporated (gaseous) coolant passes through the flow control aperture 109 into the first evaporation chamber 106. The evaporated coolant then flows down the first and second fluid flow conduits 103a 103b towards the adsorption pump chamber 104 and is adsorbed by the adsorbent material as described above.

Typically, as this process continues, the evaporation of coolant reduces the temperature of the coolant 201 that remains in the second evaporation chamber 107 to below the coolant's superfluid "lambda point" (approximately 2.17K in the case of ⁴He).

Once below the lambda point, the coolant 201 becomes superfluid. The superfluid coolant forms a superfluid film 202 that creeps up the sides of the second evaporation chamber 107 as shown in Figure 2B.

The flow control aperture 109 significantly limits the rate at which the superfluid film 202 can flow out of the second evaporation chamber 107. This is advantageous because it increases the length of time that the adsorption refrigerator 100 can operate in a cooling mode for (known as the "hold time" or "run time").

Controlling the rate at which the superfluid film 202 can flow out of the second evaporation chamber 107 improves the hold time because coolant that escapes from the evaporator as a superfluid typically continues through the fluid flow conduits 103a 103b and into the adsorption pump chamber 104. Typically, during this process the superfluid evaporates in the fluid flow conduits 103a 103b or in the adsorption pump chamber 104. This means that the superfluid coolant does not evaporate in the evaporator and therefore does not contribute to cooling the evaporator. As a result, additional coolant would need to be provided in the evaporator to provide a particular hold time to account for the coolant lost from the evaporator as a superfluid.

The flow control aperture 109 also limits the rate at which evaporated (gaseous) coolant flows out of the second evaporation pot 107. However, the flow control aperture 109 is suitably sized and shaped so that the flow rate of evaporated coolant provides a suitable amount of cooling.

Advantageously, locating the flow control aperture 109 within the evaporator so that it is away from the entrance of the first fluid flow conduit 103a and second fluid flow conduit 103b can further improve the performance of the device. This is because pressure oscillations caused by the high velocity gaseous coolant passing through the flow control aperture 109 can dissipate within the first evaporation chamber 106. This reduces pressure oscillations within column of gaseous coolant present in the first fluid flow conduit 103a and second fluid flow conduit 103b, thereby reducing unwanted heat transfer between the evaporator and the adsorption pump.

Advantageously, in certain embodiments the flow control aperture 109 can be positioned so that when the device 100 is in use, it is not vertically aligned with the entrance of any of the fluid flow conduits. This can further reduce pressure oscillations in the fluid flow conduits and thereby further improve the performance of the device. Such an arrangement is shown in Figure 3.

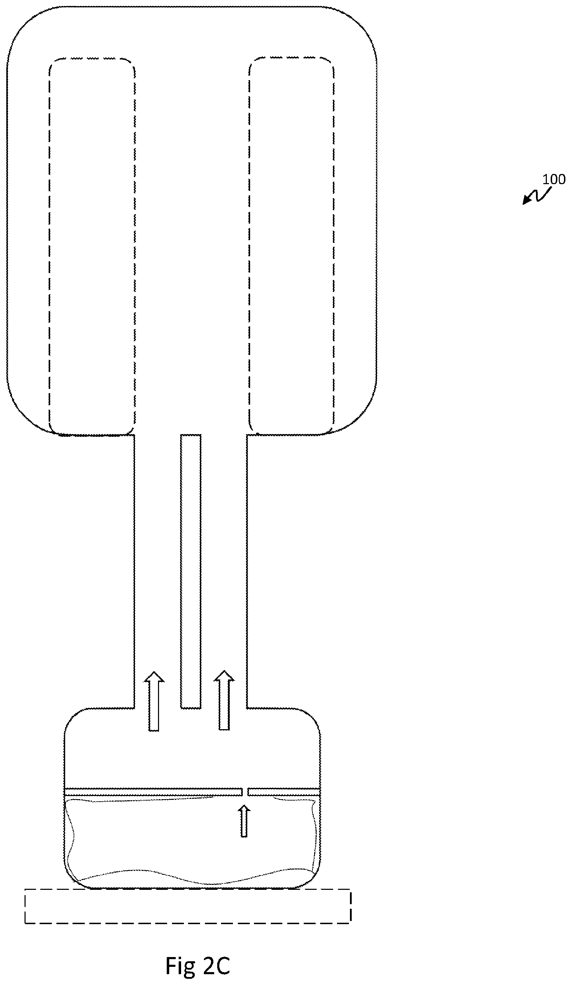

As shown in Figure 2C, the process continues as the amount of liquid coolant that remains in the second evaporation chamber reduces by the flow of evaporated coolant and a small amount of superfluid coolant through the flow control aperture.

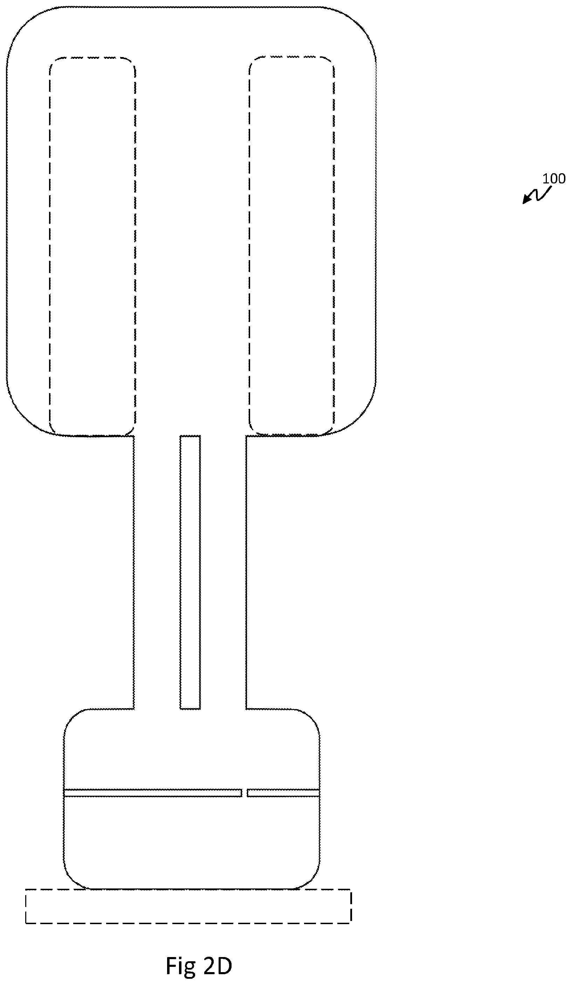

As shown in Figure 2D, after a period of time, all or a substantial portion of the coolant has been adsorbed by the adsorbent material such that no coolant remains in the first or second evaporation chambers. At this point, the cryogenic adsorption refrigerator 100 cannot provide any further cooling until it is regenerated.

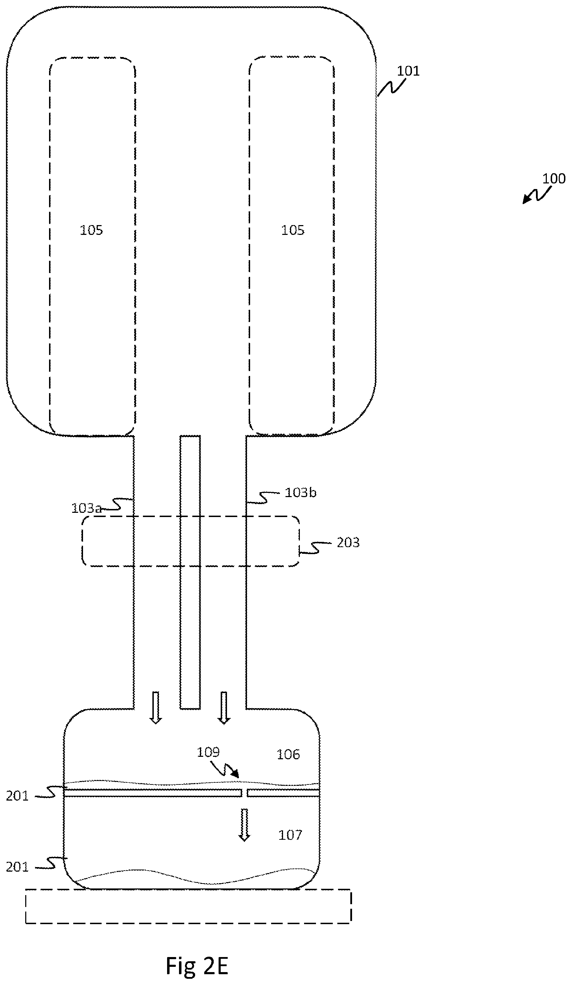

The process of regenerating the cryogenic adsorption refrigerator 100 is shown in Figure 2E.

The adsorption pump 101 is heated. Typically, the adsorption pump 101 is heated to approximately 40-50K and held at this temperature for a suitable period of time (typically at least several minutes). This causes the adsorbent material 105 to desorb the coolant.

A condensation plate 203 (shown schematically in Figure 2E) is thermally connected to the first fluid flow conduit 103a and second fluid flow conduit 103b. The condensation plate 203 is held at a temperature that causes coolant to condense. The coolant that has desorbed from the adsorbent material condenses on the condensation plate 203 and drips back down through the first and second fluid flow conduits 103a 103b into the first evaporation chamber 106 and through the flow control aperture 109 into the second evaporation chamber 107 by the force of gravity.

When a sufficient amount of coolant has been desorbed from the adsorbent material 105 and is in the evaporator as a liquid, the cryogenic adsorption refrigerator 100 can be used in a further cooling cycle. The adsorption pump 101 is cooled. As the temperature of the adsorption pump reduces towards approximately 4K, the rate of adsorption of gaseous coolant by the adsorptive material increases, which begins the next cooling cycle. The process of operating the cryogenic adsorption refrigerator 100 in a cooling then regeneration mode is repeated.

Figure 3 is a simplified schematic diagram of an evaporator 300 in accordance with certain embodiments of the invention. The evaporator 300 substantially corresponds with the evaporator described in and depicted with reference to Figure 1 except as otherwise described and depicted.

The evaporator 300 comprises a first evaporation chamber 301 and a second evaporation chamber 302. The first evaporation chamber 301 and the second evaporation chamber 302 are fluidly connected via an aperture 303 provided in a wall 304 of the evaporator 300. The aperture 303 acts as a flow control aperture.

The aperture 303 includes a first part on the side closest to the first evaporation chamber 301 that is tapered such that it decreases in diameter in the direction of the second evaporation chamber 302. The aperture 303 includes a second part on the side closest to the second evaporation chamber 302 that has a substantially constant diameter.

In certain embodiments, the inner edge of the aperture 303 is burnished. The aperture 303 can be burnished during assembly of the evaporator 300. Advantageously, burnishing the aperture 303 can remove particulate contamination from the inner edge of the aperture 303 that accumulates during the fabrication process. Such contamination can be particularly problematic if the wall 304 that the aperture is formed in is composed of a material prone to oxidation such as copper. Advantageously, the tapered portion of the aperture 303 can facilitate burnishing by guiding a suitable tool into the aperture 303.

The aperture 109 is formed to minimise surface or edge defects, such as oxide, other chemical or physical deposits, or physical irregularities such as roughness or tears.

It will be understood that in certain embodiments the aperture 303 does not include a tapered part. That is, the aperture 303 has a substantially constant diameter.

The evaporator 300 is fluidly connected to an adsorption pump via a first fluid flow conduit 305, a second fluid flow conduit 306 and a third fluid flow conduit 307.

The evaporator 300 operates as part of an adsorption refrigeration system as described herein.

As shown in Figure 3, the aperture 303 is not vertically aligned with the first fluid flow conduit 305, second fluid flow conduit 306 or the third fluid flow conduit 307. Advantageously, this allows pressure oscillations caused by the high velocity flow of gaseous coolant passing through the aperture 303 to dissipate within the first evaporation chamber 301. This can improve the overall performance of device by reducing heat transfer through the column of gaseous coolant present in the fluid flow conduits.

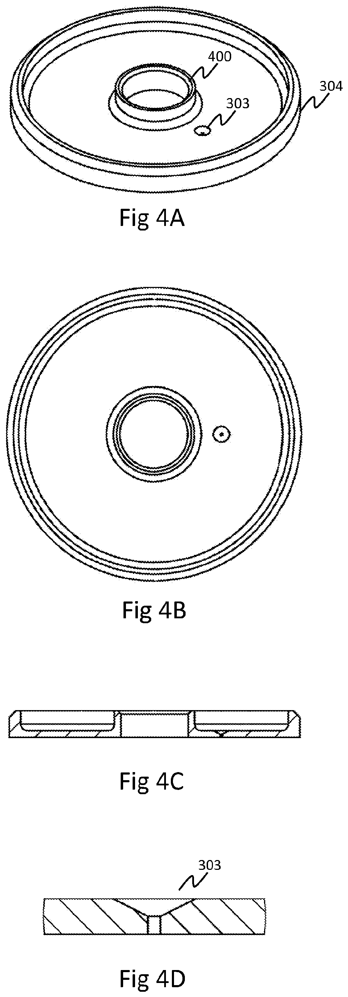

Figures 4A-4D show different views of the wall 304 of the evaporator of Figure 3. The wall 304 can be manufactured as a separate component and inserted and secured within an evaporator during assembly to create first and second evaporation chambers within an existing evaporator. For clarity, some reference signs have been omitted in Figures 4A-4D.

Figure 4A is an isometric view, Figure 4B is a top view, Figure 4C is a cross-section and Figure 4D is a further cross-section of the wall 304.

As shown in Figure 4A, the wall 304 comprises an aperture 303 that acts as a flow control aperture. The wall 304 also comprises a central aperture 400.

The central aperture 400 is shaped to fit around a central post which is provided within the device. The central aperture 400 is hard-soldered to the central post so that no fluid can flow through it. The central post is used to reinforce the evaporator to prevent physical deformation of the evaporation chambers when subjected to high pressure during operation.

It will be understood that the appropriate size of the flow control aperture will depend on the particular dimensions and operating conditions of the device. However, in certain embodiments, the flow control aperture can have a diameter of approximately 0.35mm. In certain embodiments, the flow control aperture can have a diameter of between approximately 0.2mm and 2.5mm.

In embodiments where the aperture includes a first tapered part and a second constant diameter part, the first tapered part can have a diameter of approximately 2.35mm at its widest point and can taper to a diameter of approximately 0.35mm. The second constant diameter part can have a diameter of approximately 0.35mm.

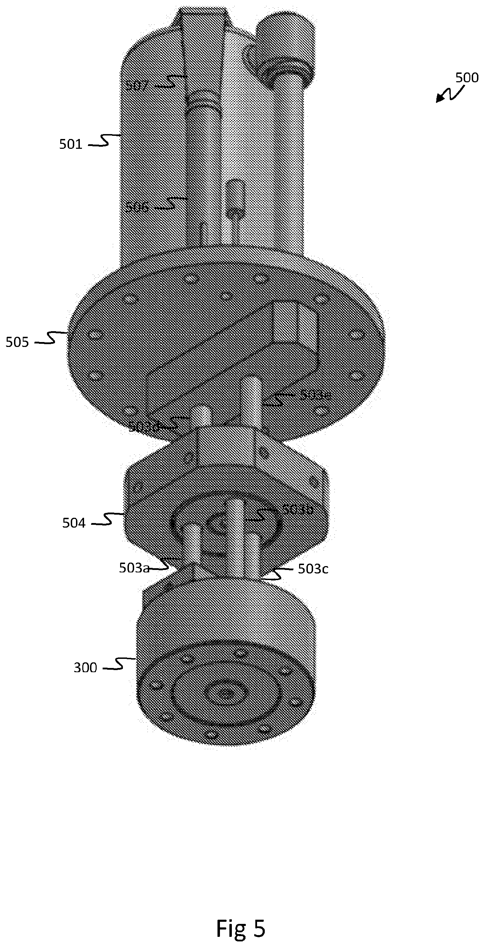

Figure 5 is a simplified diagram of a cryogenic adsorption refrigerator system 500 that includes the evaporator 300 of Figure 3. The system 500 operates substantially as described herein.

The system 500 includes an adsorption pump 501, an evaporator 300, a plurality of fluid flow conduits 503a 503b 503c 503d 503e fluidly connecting the evaporator 300 and the adsorption pump 501, a further chamber 504, a main plate 505, a heat switch 506 and a heat strap 507.

The fluid flow conduits 503a 503b 503c 503d 503e and adsorption pump 501 are typically of a type described herein.

The main plate 505 mechanically supports the remainder of the system 500. The main plate 505 can be composed of a thermally conductive material such as copper. The main plate 505 can be thermally connected to a suitable cooling device such as a pulse tube refrigerator to pre-cool the system 500. Typically, the main plate 505 is held at a temperature of approximately 4K during operation of the device.

The chamber 504 is fluidly connected to an end of the fluid flow conduits 503a 503b 503c that fluidly connect with the evaporator 300, and to an end of the fluid flow conduits 503d 503e that fluidly connect with the adsorption pump 501. The further chamber 504 is arranged to intercept the flow of gaseous coolant between the evaporator 300 and the adsorption pump 501.

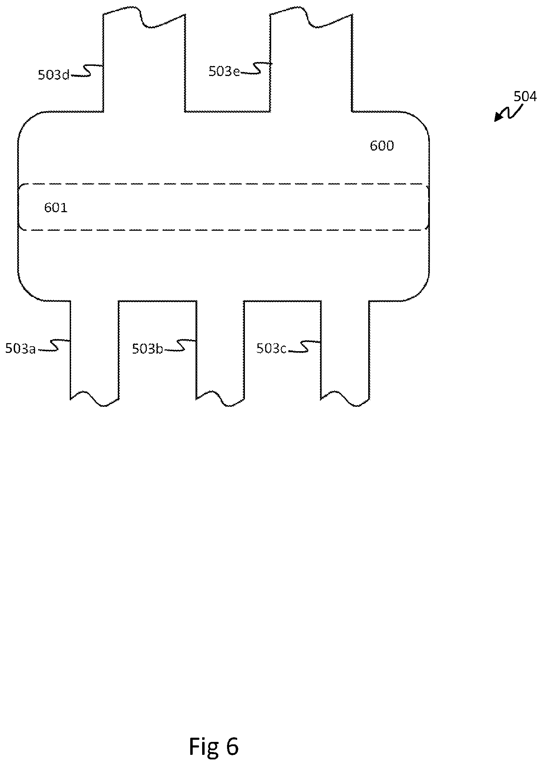

The chamber 504 is depicted in more detail in Figure 6, which is a simplified schematic diagram of the chamber 504.

The chamber 504 defines an annular cavity 600. The chamber 504 is typically composed of copper. The cavity 600 can be filled with a mesh 601 composed of copper or another suitable material. The mesh 601 provides a roughened internal surface within the cavity 600. The mesh 601 can be secured to the inside walls of the cavity 600 by a suitable fixing such as silver solder.

The chamber 504 provides several advantages. It extracts enthalpy from the gaseous coolant flowing through it. This can improve the thermal performance of the device.

The chamber 504 also encourages the evaporation of superfluid coolant that climbs into it from the evaporator. The large surface area inside the chamber 504 forces the superfluid film to spread out which promotes evaporation

The chamber 504 also creates turbulence within the gaseous coolant flowing through it. This turbulence can interrupt oscillations in the column of gaseous coolant within the fluid flow conduits 503a 503b 503b that result from the high velocity gaseous coolant passing through the flow control aperture. Such oscillations can otherwise result in unwanted heat transfer through the column of gaseous coolant present in the fluid flow conduits 503a 503b 503c.

As shown in Figure 6, the chamber 504 is connected to the evaporator 300 via three fluid flow conduits 503a 503b 503c and to the adsorption pump via two fluid flow conduits 503d 503e. Advantageously, having a different number of inlet and outlet fluid flow conduits for the chamber 504 can increase turbulence within the chamber 504. As shown in Figure 6, the fluid flow conduits 503d 503e that fluidly connect the chamber 504 with the adsorption pump 501 can have a smaller diameter than the fluid flow conduits 503a 503b 503c that fluidly connect the chamber 504 with the evaporator 300.

Returning to Figure 5, as will be understood by the skilled person, the heat switch 506 and heat strap 507 are used to control the thermal connection between the adsorption pump 501 and the main plate 505. When turned off, the heat switch 506 thermally isolates the adsorption pump 501 and the main plate 505. This allows the adsorption pump 501 to increase in temperature during the regeneration cycle (typically via a pump heater, not shown). When turned on, the heat switch 506 provides a high level of thermal conductivity between the adsorption pump 501 and the main plate 505. Since the main plate is typically maintained at approximately 4K, turning the heat switch on allows the temperature of the adsorption pump 501 to be reduced to approximately 4K.

The system 500 may include further components as will be understood by the skilled person. For example, the system 500 can be enclosed in an outer vacuum can and can include a pre-cooling refrigerator.

It will be understood that the cryogenic adsorption refrigerators described herein can be operated in low or zero gravity environments such as on spacecraft or satellites. In such applications, a porous material such as metal sinter can be provided within the first and second evaporation chamber to ensure coolant remains within the evaporator during a cooling cycle until it evaporates.

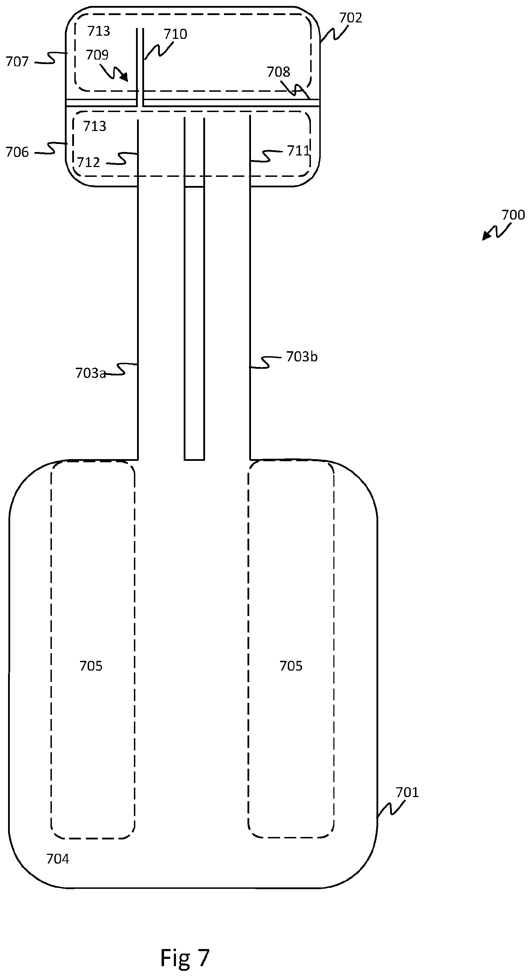

In certain embodiments, the cryogenic adsorption refrigerators described herein can operate in a different orientation to that described with reference to Figures 1-6. One such arrangement is shown in Figure 7.

Figure 7 is a simplified schematic diagram of a cryogenic adsorption refrigerator in accordance with certain embodiments of the invention. The cryogenic adsorption refrigerator 700 substantially corresponds with the cryogenic adsorption refrigerator described with reference to Figure 1 except as otherwise described and depicted.

The cryogenic adsorption refrigerator 700 is operated in an inverted orientation relative to the cryogenic adsorption refrigerator shown in Figure 1. In certain applications it can be useful to operate a cryogenic adsorption refrigerator in the orientation shown in Figure 7 because it can make it easier to access parts of the device. For example, locating the evaporator as the uppermost part of the device makes it easier to secure and unsecure a thermal load to the device.

The cryogenic adsorption refrigerator 700 comprises an adsorption pump 701, an evaporator 702, a first fluid flow conduit 703a and a second fluid flow conduit 703b. The adsorption pump 701 comprises a pump chamber 704. The evaporator 702 comprises two evaporation chambers provided by a first evaporation chamber 706 and a second evaporation chamber 707. The evaporator 702 comprises a wall 708 that separates the first evaporation chamber 706 and the second evaporation chamber 707. The first evaporation chamber 706 and the second evaporation chamber 707 are fluidly connected via an aperture 709. The aperture 709 is a flow control aperture in that it used to control the flow of coolant between the two chambers.

In contrast with the cryogenic adsorption refrigerator of Figure 1, the wall 708 includes an annular wall 710 that encloses the aperture 709 and extends into the second evaporation chamber 707. The annular wall 710 enables liquid coolant to be present within the second evaporation chamber 707 below the level of the uppermost part of the annular wall 710 without draining into the first evaporation chamber 706. In certain embodiments, the inner diameter of the annular wall 710 provides the flow control aperture 709. Alternatively, in certain embodiments the annular wall provides a fluid flow conduit that directs coolant towards the flow control aperture 709, which is located in the wall 708, and the flow control aperture 709 has a smaller diameter than the inner diameter of the annular wall 710.

Additionally, in contrast with the cryogenic adsorption refrigerator of Figure 1, respective ends 711 712 of the first fluid flow conduit 703a and second fluid flow conduit 703b extend into the first evaporation chamber 706. The extended fluid flow conduits 711 712 enable liquid coolant to be present within the first evaporation chamber 706 below the uppermost part of the fluid flow conduits without draining into the pump chamber 704.

In certain embodiments, a porous material 713 such as metal sinter can be provided within the first and second evaporation chambers 706 707 to further improve the retention of coolant within the evaporator 702 until it evaporates.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present invention have been described herein for purposes of illustration.

The scope of the present invention is solely defined by the following claims.

## Claims

1. A cryogenic adsorption refrigerator (100) for cooling a thermal load (200), the cryogenic adsorption refrigerator (100) comprising:
an adsorption pump (101) comprising a chamber (104) containing an adsorbent material (105);
an evaporator (102) arranged to contain coolant; and
one or more fluid flow conduits (103a, 103b);
wherein the evaporator (102) comprises a first evaporation chamber (106);
wherein
the first evaporation chamber (106) is fluidly connected with the adsorption pump (101) via the one or more fluid flow conduits (103a, 103b) such that gaseous coolant can flow from the first evaporation chamber (106) to the adsorption pump (101);
**characterised in that** the evaporator (102) further comprises a second evaporation chamber (107) and a flow control aperture (109); and **in that**
the first evaporation chamber (106) and the second evaporation chamber (107) are fluidly connected via the flow control aperture (109) arranged to reduce the flow of superfluid coolant from the second evaporation chamber (107) to the first evaporation chamber (106).

2. A cryogenic adsorption refrigerator (100) as claimed in claim 1, further comprising a wall (108), wherein the first evaporation chamber (106) and the second evaporation chamber (107) are separated by the wall (108), and the flow control aperture (109) is provided within the wall (108).

3. A cryogenic adsorption refrigerator (100) as claimed in claim 2, wherein the wall (108) is provided by a plate positioned within the evaporator (102) between the first evaporation chamber (106) and the second evaporation chamber (107).

4. A cryogenic adsorption refrigerator (100) as claimed in claim 2 or claim 3,
wherein the first evaporation chamber (106) has a depth of approximately 3mm between the wall (108) and at least one of the one or more fluid flow conduits (103a, 103b).

5. A cryogenic adsorption refrigerator (100) as claimed in any of claims 2 to 4,
wherein the wall (108) comprises a further annular wall that encloses the flow control aperture (109) and extends into the second evaporation chamber (107).

6. A cryogenic adsorption refrigerator (100) as claimed any previous claim,
wherein at least part of the flow control aperture (109) is tapered such that it reduces in diameter in the direction of the second evaporation chamber (107).

7. A cryogenic adsorption refrigerator (100) as claimed in any previous claim,
wherein the flow control aperture (109) comprises an inner edge that is electropolished or an atomically sharp knife-edge.

8. A cryogenic adsorption refrigerator (100) as claimed in any previous claim,
wherein the flow control aperture (109) has a diameter of between approximately 0.2mm and 2.5mm.

9. A cryogenic adsorption refrigerator (100) as claimed in any previous claim,
wherein the flow control aperture (109) is located such that in use it is not vertically aligned with the one or more fluid flow conduits (103a, 103b).

10. A cryogenic adsorption refrigerator (100) as claimed in any previous claim,
wherein the cryogenic adsorption refrigerator (100) comprises two or more fluid flow conduits (103a, 103b).

11. A cryogenic adsorption refrigerator (100) as claimed in any previous claim,
wherein in use the first evaporation chamber (106) is an upper evaporation chamber and the second evaporation chamber (107) is a lower evaporation chamber.

12. A cryogenic adsorption refrigerator (100) as claimed in any previous claim,
wherein the first evaporation chamber (106), the second evaporation chamber (107) and the flow control aperture (109) are arranged such that in use during a regeneration cycle liquid coolant falls by gravity from the first evaporation chamber (106) to the second evaporation chamber (107) via the flow control aperture (109).

13. A cryogenic adsorption refrigerator (100) as claimed in any previous claim,
wherein the one or more fluid flow conduits (103a, 103b) directly fluidly connect the first evaporation chamber (106) with the adsorption pump (101).

14. A cryogenic adsorption refrigerator (100) as claimed in any of claims 1 to 12,
wherein the device comprises a further chamber (504) arranged to intercept fluid travelling between the first evaporation chamber and the adsorption pump (501), and
wherein the one or more fluid flow conduits (503a, 503b, 503c) fluidly connect the first evaporation chamber with the further chamber (504).

15. A cryogenic adsorption refrigerator (100) as claimed in claim 14, further comprising one or more further fluid flow conduits (503d, 503e) fluidly connecting the further chamber (504) with the adsorption pump (501).

16. A cryogenic adsorption refrigerator (100) as claimed in claim 14 or 15,
wherein the further chamber (504) defines an annular cavity (600).

17. A cryogenic adsorption refrigerator (100) as claimed in claim 16, wherein a mesh (601) is located within the annular cavity (600).

18. A cryogenic adsorption refrigerator (100) as claimed in any of claims 15 to 17, wherein the one or more fluid flow conduits (503a, 503b, 503c) that fluidly connect the first evaporation chamber with the further chamber (504) have a smaller diameter than the one or more further fluid flow conduits (503d, 503e) that fluidly connect the further chamber (504) with the adsorption pump (501).

19. A cryogenic adsorption refrigerator (100) as claimed in any of claim 15 to 18, wherein the number of fluid flow conduits (503a, 503b, 503c) fluidly connecting the first evaporation chamber with the further chamber (504) is different to the number of further fluid flow conduits (503d, 503e) fluidly connecting the further chamber (504) with the adsorption pump (501).

20. A cryogenic adsorption refrigerator (100) as claimed in any previous claim,
wherein a porous material is provided within the first evaporation chamber (106) and the second evaporation chamber (107).

21. A cryogenic adsorption refrigerator (100) as claimed in any previous claim, wherein the one or more fluid flow conduits (103a, 103b) extend into the first evaporation chamber (106).

## Patentansprüche

1. Kryogene Adsorptionskältemaschine (100) zum Kühlen einer thermischen Last (200), wobei die kryogene Adsorptionskältemaschine (100) umfasst:
eine Adsorptionspumpe (101), die eine Kammer (104) umfasst, die ein Adsorptionsmaterial (105) enthält;
einen Verdampfer (102), der dazu eingerichtet ist, Kältemittel zu enthalten; und
eine oder mehrere Fluidströmungsleitungen (103a, 103b);
wobei der Verdampfer (102) eine erste Verdampfungskammer (106) umfasst;
wobei
die erste Verdampfungskammer (106) über die eine oder die mehreren Fluidströmungsleitungen (103a, 103b) strömungstechnisch mit der Adsorptionspumpe (101) verbunden ist, sodass gasförmiges Kältemittel von der ersten Verdampfungskammer (106) zur Adsorptionspumpe (101) strömen kann;
**dadurch gekennzeichnet, dass** der Verdampfer (102) weiter eine zweite Verdampfungskammer (107) und eine Strömungssteuerungsöffnung (109) umfasst; und dass
die erste Verdampfungskammer (106) und die zweite Verdampfungskammer (107) über die Strömungssteuerungsöffnung (109), die dazu eingerichtet ist, die Strömung von suprafluidem Kältemittel von der zweiten Verdampfungskammer (107) zur ersten Verdampfungskammer (106) zu verringern, strömungstechnisch verbunden sind.

2. Kryogene Adsorptionskältemaschine (100) nach Anspruch 1, die weiter eine Wand (108) umfasst, wobei die erste Verdampfungskammer (106) und die zweite Verdampfungskammer (107) durch die Wand (108) getrennt sind und die Strömungssteuerungsöffnung (109) innerhalb der Wand (108) vorgesehen ist.

3. Kryogene Adsorptionskältemaschine (100) nach Anspruch 2, wobei die Wand (108) durch eine Platte vorgesehen ist, die innerhalb des Verdampfers (102) zwischen der ersten Verdampfungskammer (106) und der zweiten Verdampfungskammer (107) positioniert ist.

4. Kryogene Adsorptionskältemaschine (100) nach Anspruch 2 oder Anspruch 3, wobei die erste Verdampfungskammer (106) zwischen der Wand (108) und mindestens einer der einen oder der mehreren Fluidströmungsleitungen (103a, 103b) eine Tiefe von ungefähr 3 mm aufweist.

5. Kryogene Adsorptionskältemaschine (100) nach einem der Ansprüche 2 bis 4, wobei die Wand (108) eine weitere ringförmige Wand umfasst, die die Strömungssteuerungsöffnung (109) umschließt und sich in die zweite Verdampfungskammer (107) erstreckt.

6. Kryogene Adsorptionskältemaschine (100) nach einem vorstehenden Anspruch, wobei mindestens ein Teil der Strömungssteuerungsöffnung (109) verjüngt ist, sodass sich ihr Durchmesser in Richtung der zweiten Verdampfungskammer (107) verringert.

7. Kryogene Adsorptionskältemaschine (100) nach einem vorstehenden Anspruch, wobei die Strömungssteuerungsöffnung (109) eine Innenkante umfasst, die elektropoliert oder eine atomar scharfe Messerkante ist.

8. Kryogene Adsorptionskältemaschine (100) nach einem vorstehenden Anspruch, wobei die Strömungssteuerungsöffnung (109) einen Durchmesser zwischen ungefähr 0,2 mm und 2,5 mm aufweist.

9. Kryogene Adsorptionskältemaschine (100) nach einem vorstehenden Anspruch, wobei die Strömungssteuerungsöffnung (109) so angeordnet ist, dass sie im Betrieb nicht vertikal mit der einen oder den mehreren Fluidströmungsleitungen (103a, 103b) fluchtet.

10. Kryogene Adsorptionskältemaschine (100) nach einem vorstehenden Anspruch, wobei die kryogene Adsorptionskältemaschine (100) zwei oder mehr Fluidströmungsleitungen (103a, 103b) umfasst.

11. Kryogene Adsorptionskältemaschine (100) nach einem vorstehenden Anspruch, wobei im Betrieb die erste Verdampfungskammer (106) eine obere Verdampfungskammer ist und die zweite Verdampfungskammer (107) eine untere Verdampfungskammer ist.

12. Kryogene Adsorptionskältemaschine (100) nach einem vorstehenden Anspruch, wobei die erste Verdampfungskammer (106), die zweite Verdampfungskammer (107) und die Strömungssteuerungsöffnung (109) so eingerichtet sind, dass im Betrieb während eines Regenerationszyklus flüssiges Kältemittel durch Schwerkraft von der ersten Verdampfungskammer (106) über die Strömungssteuerungsöffnung (109) in die zweite Verdampfungskammer (107) fällt.

13. Kryogene Adsorptionskältemaschine (100) nach einem vorstehenden Anspruch, wobei die eine oder die mehreren Fluidströmungsleitungen (103a, 103b) die erste Verdampfungskammer (106) strömungstechnisch direkt mit der Adsorptionspumpe (101) verbinden.

14. Kryogene Adsorptionskältemaschine (100) nach einem der Ansprüche 1 bis 12, wobei die Vorrichtung eine weitere Kammer (504) umfasst, die dazu eingerichtet ist, sich zwischen der ersten Verdampfungskammer und der Adsorptionspumpe (501) bewegendes Fluid abzufangen, und wobei die eine oder die mehreren Fluidströmungsleitungen (503a, 503b, 503c) die erste Verdampfungskammer strömungstechnisch mit der weiteren Kammer (504) verbinden.

15. Kryogene Adsorptionskältemaschine (100) nach Anspruch 14, die weiter eine oder mehrere weitere Fluidströmungsleitungen (503d, 503e) umfasst, die die weitere Kammer (504) strömungstechnisch mit der Adsorptionspumpe (501) verbinden.

16. Kryogene Adsorptionskältemaschine (100) nach Anspruch 14 oder 15, wobei die weitere Kammer (504) einen ringförmigen Hohlraum (600) definiert.

17. Kryogene Adsorptionskältemaschine (100) nach Anspruch 16, wobei innerhalb des ringförmigen Hohlraums (600) ein Netz (601) angeordnet ist.

18. Kryogene Adsorptionskältemaschine (100) nach einem der Ansprüche 15 bis 17, wobei die eine oder die mehreren Fluidströmungsleitungen (503a, 503b, 503c), die die erste Verdampfungskammer strömungstechnisch mit der weiteren Kammer (504) verbinden, einen kleineren Durchmesser aufweisen als die eine oder die mehreren weiteren Fluidströmungsleitungen (503d, 503e), die die weitere Kammer (504) strömungstechnisch mit der Adsorptionspumpe (501) verbinden.

19. Kryogene Adsorptionskältemaschine (100) nach einem der Ansprüche 15 bis 18, wobei die Anzahl von Fluidströmungsleitungen (503a, 503b, 503c), die die erste Verdampfungskammer strömungstechnisch mit der weiteren Kammer (504) verbinden, sich von der Anzahl von weiteren Fluidströmungsleitungen (503d, 503e) unterscheidet, die die weitere Kammer (504) strömungstechnisch mit der Adsorptionspumpe (501) verbinden.

20. Kryogene Adsorptionskältemaschine (100) nach einem vorstehenden Anspruch, wobei innerhalb der ersten Verdampfungskammer (106) und der zweiten Verdampfungskammer (107) ein poröses Material vorgesehen ist.

21. Kryogene Adsorptionskältemaschine (100) nach einem vorstehenden Anspruch, wobei sich die eine oder die mehreren Fluidströmungsleitungen (103a, 103b) in die erste Verdampfungskammer (106) erstrecken.

## Revendications

1. Réfrigérateur à adsorption cryogénique (100) pour refroidir une charge thermique (200), le réfrigérateur à adsorption cryogénique (100) comprenant :
une pompe d'adsorption (101) comprenant une chambre (104) contenant un matériau adsorbant (105) ;
un évaporateur (102) agencé pour contenir un agent de refroidissement ; et
un ou plusieurs conduits d'écoulement de fluide (103a, 103b) ;
dans lequel l'évaporateur (102) comprend une première chambre d'évaporation (106) ; dans lequel
la première chambre d'évaporation (106) est raccordée à la pompe d'adsorption (101) au moyen des un ou plusieurs conduits d'écoulement de fluide (103a, 103b) de telle sorte qu'un agent de refroidissement gazeux puisse s'écouler depuis la première chambre d'évaporation (106) vers la pompe d'adsorption (101) ;
**caractérisé en ce que** l'évaporateur (102) comprend en outre une seconde chambre d'évaporation (107) et un orifice de régulation d'écoulement (109) ; et **en ce que**
la première chambre d'évaporation (106) et la seconde chambre d'évaporation (107) sont raccordées de manière fluidique par l'orifice de régulation d'écoulement (109) agencé pour réduire l'écoulement d'agent de refroidissement superfluide depuis la seconde chambre d'évaporation (107) vers la première chambre d'évaporation (106).

2. Réfrigérateur à adsorption cryogénique (100) selon la revendication 1, comprenant en outre une paroi (108), dans lequel la première chambre d'évaporation (106) et la seconde chambre d'évaporation (107) sont séparées par la paroi (108) et l'orifice de régulation d'écoulement (109) est ménagé à l'intérieur de la paroi (108).

3. Réfrigérateur à adsorption cryogénique (100) selon la revendication 2, dans lequel la paroi (108) est fournie par une plaque positionnée à l'intérieur de l'évaporateur (102) entre la première chambre d'évaporation (106) et la seconde chambre d'évaporation (107).

4. Réfrigérateur à adsorption cryogénique (100) selon la revendication 2 ou la revendication 3, dans lequel la première chambre d'évaporation (106) présente une profondeur d'environ 3 mm entre la paroi (108) et au moins un des un ou plusieurs conduits d'écoulement de fluide (103a, 103b).

5. Réfrigérateur à adsorption cryogénique (100) selon l'une quelconque des revendications 2 à 4, dans lequel la paroi (108) comprend une paroi annulaire supplémentaire qui entoure l'orifice de régulation d'écoulement (109) et s'étend jusque dans la seconde chambre d'évaporation (107).

6. Réfrigérateur à adsorption cryogénique (100) selon une quelconque revendication précédente, dans lequel au moins une partie de l'orifice de régulation d'écoulement (109) est conique de telle sorte que son diamètre se réduit dans la direction de la seconde chambre d'évaporation (107).

7. Réfrigérateur à adsorption cryogénique (100) selon une quelconque revendication précédente, dans lequel l'orifice de régulation d'écoulement (109) comprend un bord interne qui est électropoli ou un bord de couteau atomiquement tranchant.

8. Réfrigérateur à adsorption cryogénique (100) selon une quelconque revendication précédente, dans lequel l'orifice de régulation d'écoulement (109) présente un diamètre compris entre environ 0,2 mm et 2,5 mm.

9. Réfrigérateur à adsorption cryogénique (100) selon une quelconque revendication précédente, dans lequel l'orifice de régulation d'écoulement (109) est situé de telle sorte qu'en utilisation, il ne soit pas aligné verticalement sur les un ou plusieurs conduits d'écoulement de fluide (103a, 103b).

10. Réfrigérateur à adsorption cryogénique (100) selon une quelconque revendication précédente, dans lequel le réfrigérateur à adsorption cryogénique (100) comprend deux, ou plus, conduits d'écoulement de fluide (103a, 103b).

11. Réfrigérateur à adsorption cryogénique (100) selon une quelconque revendication précédente, dans lequel, en utilisation, la première chambre d'évaporation (106) est une chambre d'évaporation supérieure et la seconde chambre d'évaporation (107) est une chambre d'évaporation inférieure.

12. Réfrigérateur à adsorption cryogénique (100) selon une quelconque revendication précédente, dans lequel la première chambre d'évaporation (106), la seconde chambre d'évaporation (107) et l'orifice de régulation d'écoulement (109) sont agencés de telle sorte qu'en utilisation, pendant un cycle de régénération, l'agent de refroidissement liquide tombe par gravité de la première chambre d'évaporation (106) à la seconde chambre d'évaporation (107) par l'orifice de régulation d'écoulement (109).

13. Réfrigérateur à adsorption cryogénique (100) selon une quelconque revendication précédente, dans lequel les un ou plusieurs conduits d'écoulement de fluide (103a, 103b) raccordent directement de manière fluidique la première chambre d'évaporation (106) à la pompe d'adsorption (101).

14. Réfrigérateur à adsorption cryogénique (100) selon l'une quelconque des revendications 1 à 12, dans lequel le dispositif comprend une chambre supplémentaire (504) agencée pour intercepter un fluide circulant entre la première chambre d'évaporation et la pompe d'adsorption (501) et dans lequel les un ou plusieurs conduits d'écoulement de fluide (503a, 503b, 503c) raccordent de manière fluidique la première chambre d'évaporation à la chambre supplémentaire (504).

15. Réfrigérateur à adsorption cryogénique (100) selon la revendication 14, comprenant en outre un ou plusieurs conduits d'écoulement de fluide supplémentaire (503d, 503e) raccordant de manière fluidique la chambre supplémentaire (504) à la pompe d'adsorption (501).

16. Réfrigérateur à adsorption cryogénique (100) selon la revendication 14 ou 15, dans lequel la chambre supplémentaire (504) définit une cavité annulaire (600).

17. Réfrigérateur à adsorption cryogénique (100) selon la revendication 16, dans lequel un treillis (601) est situé à l'intérieur de la cavité annulaire (600).

18. Réfrigérateur à adsorption cryogénique (100) selon l'une quelconque des revendications 15 à 17, dans lequel les un ou plusieurs conduits d'écoulement de fluide (503a, 503b, 503c) qui raccordent de manière fluidique la première chambre d'évaporation à la chambre supplémentaire (504) présentent un diamètre plus petit que celui des un ou plusieurs conduits d'écoulement de fluide supplémentaires (503d, 503e) qui raccordent de manière fluidique la chambre supplémentaire (504) à la pompe d'adsorption (501).

19. Réfrigérateur à adsorption cryogénique (100) selon l'une quelconque des revendications 15 à 18, dans lequel le nombre de conduits d'écoulement de fluide (503a, 503b, 503c) raccordant de manière fluidique la première chambre d'évaporation à la chambre supplémentaire (504) est différent du nombre de conduits d'écoulement de fluide supplémentaires (503d, 503e) raccordant de manière fluidique la chambre supplémentaire (504) à la pompe d'adsorption (501).

20. Réfrigérateur à adsorption cryogénique (100) selon une quelconque revendication précédente, dans lequel un matériau poreux est disposé dans la première chambre d'évaporation (106) et la seconde chambre d'évaporation (107).

21. Réfrigérateur à adsorption cryogénique (100) selon une quelconque revendication précédente, dans lequel les un ou plusieurs conduits d'écoulement de fluide (103a, 103b) s'étendent jusque dans la première chambre d'évaporation (106).
